# EUROPEAN PATENT APPLICATION

(11) **EP 2 391 131 A2**
(43) Date of publication of application: **30.11.2011**
(21) Application number: 11167376.0
(22) Date of filing: 24.05.2011
(51) Int. Cl.: H04N 7/26, H04N 7/50

(54) **Video processing system, computer program product and method for decoding an encoded video stream**

(30) Priority: 27.05.2010 US 788394
(71) Applicant: Freescale Semiconductor, Inc., Austin, TX 78735 (US)
(72) Inventor: Steinberg, Erez, 69121, Tel Aviv (IL); Nakash, Moshe, 60401, Or Yehuda (IL); Yitshcak, Yehuda, 42910 Avihail (IL)
(74) Representative: Ferro, Frodo Nunes

(57) **Abstract**

Video processing system, computer program product and method for decoding an encoded video stream, the method includes: receiving an encoded video stream that comprises a plurality of encoded video frames, each encoded video frame comprises multiple encoded frame portions; and repeating, for each encoded frame portion: providing, to an entropy decoder, different quality level of the encoded frame portion and context information generated during an entropy decoding process of different quality level representations of another encoded frame portion: entropy decoding, by the entropy decoder, the different quality level representations of the frame portion based on the context information: wherein the entropy decoding comprises updating the context information; wherein the entropy decoding is selected from a group consisting of context based adaptive binary arithmetic coding (CABAC) and context based variable length coding (CBVLC); and storing the context information.

## Description

### Field of the invention

This invention relates to a video processing system, a computer program product and a method for decoding an encoded video stream.

### Background of the invention

The Scalable Video Coding (SVC) amendment to the H.264 recommendation (H.264 SVC) of Telecommunication Standardization Sector (ITU-T) of the International Telecommunication Union describes a scalable video stream decoder which is used to decode a subset of a bit stream in order to adapt it to the various needs or preferences of end users as well as to varying terminal capabilities or network conditions.

The SVC bit stream includes different layers of encoded video, the base layer is referred to as a first layer and is a valid H.264 SVC video stream. Additional layers are referred to as enhancement layers and provide higher image quality, higher resolution or higher frame rates.

These different layers are processed using inter-layer prediction techniques that require metadata that is re-used between layers.

The data bandwidth generated by storing and loading the metadata is huge, and is considered to be a limiting factor in H.264 SVC decoder implementations and other decoders units meta-data.

### Summary of the invention

The present invention provides a video processing system, a computer program product and a method for managing a transfer of information between a memory unit and a decoder as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the FIGs. are illustrated for simplicity and clarity and have not necessarily been drawn to scale;
FIG. 1 schematically shows a first example of an embodiment of a method;
FIG. 2 schematically shows a first example of an embodiment of data structures;
FIG. 3 schematically shows a first example of an embodiment of a video processing system;
FIGs. 4 and 5 schematically show a second example of embodiments of data structures;
FIGs. 6 and 7 schematically show a second example of a method; and
FIG. 8 schematically shows a second example of an embodiment of a video processing system.

### Detailed description of the preferred embodiments

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

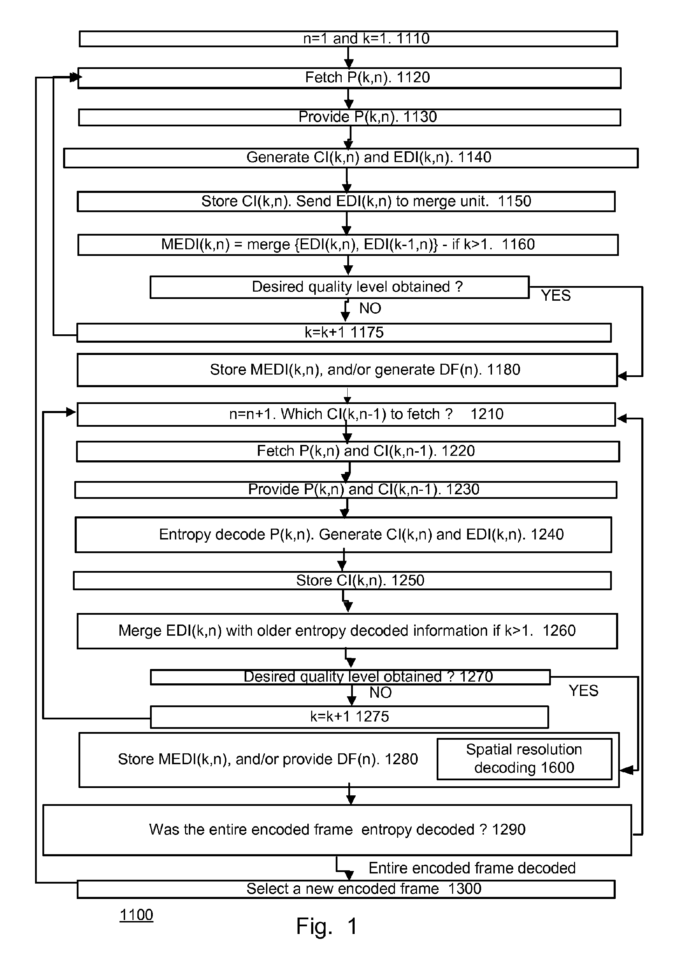

FIGs. 1 and 6-7 respectively illustrate a method for decoding an encoded video stream. In these examples, a memory unit stores the encoded video stream. The encoded video stream includes multiple layers of different quality levels. An amount of data exchanged between an entropy decoder and the memory unit is reduced by sending to the entropy decoder information for completing an entropy decoding process of an encoded frame portion for all the different quality levels. Information relating to a new encoded frame portion is fetched once all the different quality level representations of the encoded frame portion have been entropy decoded.

Although in FIGs. 1 and 6-7 the method is illustrated by blocks representing stages these blocks do not represent stages which are separate and individual in time. Rather, the stages may be performed in continuous, overlapping and/or parallel manner.

The entropy decoding can include, for example, context based variable length coding (CBVLC) decoding or context based adaptive binary arithmetic coding (CABAC) decoding. A CABAC decoder recursively partitions an interval (that represents encoded information - such as a bin) into sub-intervals. The length (range) of the interval or sub-interval (denoted codRange), at least one interval bound (upper bound - codllow, or a lower bound), a least probable value probability, a most probable value (valMps) per bin, and a most probable value probability (pStateldx) may form entropy decoder context information CI(k,n). This entropy decoder context information is updated during the regular CABAC decoding to reflect the values of encoded information that was CABAC coded. A CABAC decoder also receives an offset that reflects values of the encoded information. The range may be normalized or re-normalized during the CABAC decoding in order to facilitate an efficient representation of smaller sub-intervals. A CAVLC decoder also generates entropy decoder context information such as macroblock type (mb_type) and motion vectors.

In the example, the method 1100 starts by (stage 1110) setting an encoded frame portion index n to an initial value, such as one (n=1). A quality layer index k is set to an initial value, such as one (k=1). It is noted that other initial values may be selected if desired.

Stage 1110 is followed by (stage 1120) fetching, from a memory unit, the n'th encoded frame portion P(k,n) of the k'th quality level (also referred to as the k'th quality level n'th encoded frame portion).

Stage 1120 is followed by (stage 1130) providing, to an entropy decoder, P(k,n). Stage 1130 may also include providing initialization context information to the entropy decoder. An entropy decoder should be initialized to a predefined initial state. This state is known in advance and may depend on the type of entropy decoding executed by the entropy decoder.

Stage 1130 is followed by (stage 1140) entropy decoding P(k,n) by the entropy decoder.

Stage 1140 includes generating a k'th quality layer n'th encoded frame portion for the context information CI(k,n) and generating a k'th quality layer n'th encoded frame for the portion entropy decoded information EDI(k,n).

If, for example, the entropy decoding includes CABAC repetitively decoding then stage 1140 may include partitioning an interval (that represents encoded information - such as a bin) into sub-intervals. The repetitions provide a sequence of sub-intervals of certain lengths. EDI(k,n) represents the length of the sub-intervals that are repetitively partitioned during stage 1140. An non-limiting example of CABAC encoding is provided in "Context-Based Adaptive Binary Arithmetic Coding in the H.264/AVC Video Compression Standard", D. Marpe, H. Schwarts and T. Wiegand, 620 IEEE Transactions on Circuits and Systems for Video Technology, Vol. 13, No. 7, July 2003 and is incorporated herein by reference. While a CABAC encoder converts information to an interval the CABAC decoder converts an interval into information.

Stage 1140 is followed by (stage 1150) storing CI(k,n) and sending EDI(k,n) to a merging unit.

Stage 1150 is followed by (stage 1160) merging EDI(k,n) with entropy decoded information of one or more previous quality layer for the n'th frame portion - if such information exists. The merging may include adding EDI(k,n) to entropy decoded information of one or more previous quality layer, the adding may be preceded by performing a frequency/time domain conversion and may be followed by a reverse frequency/time domain conversion.

Stage 1160 may include merging EDI(k,n) with one or more lower quality layer (k-2, k-3...) of n'th encoded frame portion entropy decoded information - if such information exists. The outcome of the merging is referred to as k'th quality layer n'th encoded frame portion merged information and is denoted MEDI(k,n).

Stage 1160 is followed by (stage 1170) checking if MEDI(k,n) reached a desired quality level. The desired quality level is set in advance - and may reflect the number of quality layers that were generated by the encoder.

If the answer is positive stage 1170 is followed by stage 1180. Else - stage 1170 is followed by (stage 1175) increasing k (k=k+1) and jumping back to stage 1120.

Stage 1180 includes storing MEDI(k,n), and additionally or alternatively, further processing MEDI(k,n) to provide a decoded n'th encoded frame portion DF(n) that may be a n'th encoded frame of a quality corresponding to quality level k. The further processing may include motion vector compensation, filtering (such as deblocking filtering), additional scalability processing (such as spatial scalability operation) and the like. Stage 1180 also includes resetting k.

Stage 1180 is followed by (stage 1210) increasing n (n=n+1) and determining which context information CI(k,n-1) to fetch during stage 1220 (that follows stage 1210). For example, context information of a certain macroblock can include context information generated during a decoding process of the neighbouring macroblocks. For example - context information of encoded macroblock EMB(1,2,2) 1041(1,2,2) may include context information generated during the decoding process of the encoded macroblock just above him (EMB(1,1,2) 1041(1,1,2)), during the decoding process of the encoded macroblock to the left ((EMB(1,2,1) 1041(1,2,1)) and one or more adjacent encoded macroblocks that were decoded before the encoded macroblock EMB(1,2,2) 1041(1,2,2).

The context information may include e.g. encoded macroblock metadata of some neighbouring frame sub-portions (if such exist), and entropy decoder context information.

Entropy decoder context information is generated and updated during entropy decoding. Entropy decoder context information may be reset to an initial value (or replaced by initialization information) per each slice or per sub-slice (also referred to as null packet). Stage 1220 may include determining whether the entropy decoder context information should be reset or not. For example- entropy decoder context information may be reset at a beginning of a decoding of a new entropy decoding atomic unit - such as Entropy decoder context information may be reset when a new slice is being decoded and may be updated, maintained and fetched until the decoding process of that new slice ends.

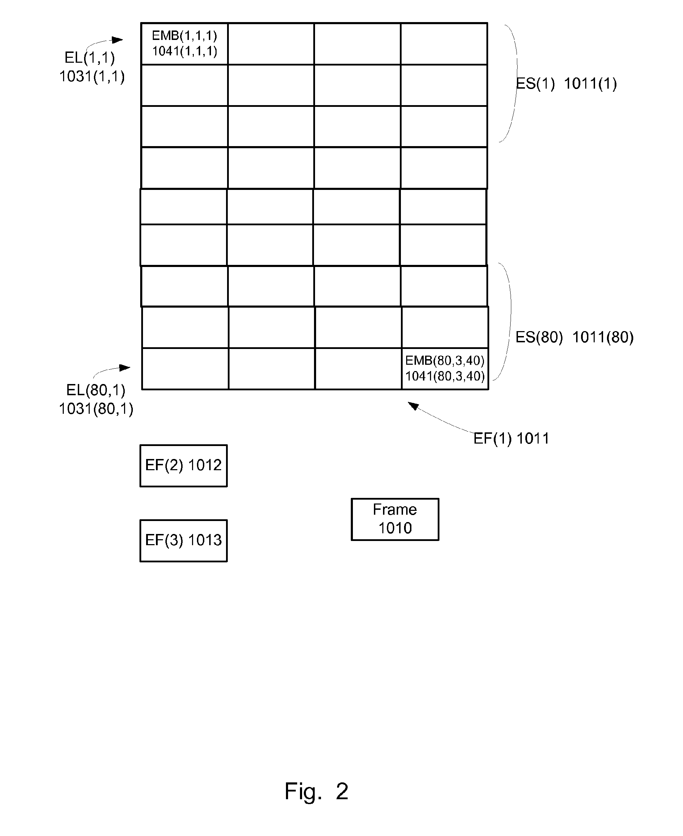

Referring to FIG. 2, video frame 1010 is represented by three encoded frames of different quality levels - EF(1) 1011, EF(2) 1012 and EF(3) 1013. It is noted that a frame can be represented by more than three encoded frames of different quality levels.

EF(1) 1011 is a first quality level encoded representation of the video frame 1010. Video frame 1010 includes eighty slices. Each slice includes three lines. Each line includes forty macroblocks that belong to two frame portions. It is noted that number of slices per frame, the number of lines per slice and the number of macroblocks per line may differ from these examples.

In the example, EF(1) 1011 includes eighty encoded slices ES(1) - ES(80) 1011(1) - 1011(80). Each encoded slice includes three encoded lines EL(1,1) - EL(80,3) 1031(1,1) - 1031(80,3). Each encoded line includes forty encoded macroblocks EMB(1,1,1) - EMB (80,3,40) 1041(1,1,1) - 1041(80,3,40). It is noted that the number of encoded slices per encoded frame, the number of encoded lines per encoded slice and the number of encoded macroblocks per encoded line may differ from these examples.

Each encoded frame portion includes half of an encoded line (twenty encoded macroblocks). It is noted that the number of encoded macroblocks per encoded frame portion may differ from forty.

The encoded frame portions may be selected by scanning the encoded lines, starting from the first forty encoded macroblocks of a line and ending at the last forty encoded macroblocks of the line.

When n is even, the n'th encoded frame portion includes the last forty encoded macroblocks of the (n/2)'th line and the encoded macroblock metadata includes macroblock metadata of the last forty macroblocks of the [(n/2)-1]"th line and of the fortieth macroblock of the (n/2)'th line.

When n is odd, the n'th encoded frame portion includes the first forty encoded macroblocks of the [(n+1)/2]'th line and the encoded macroblock metadata will include macroblock metadata of the first forty macroblocks of the [(n-1)/2]"th line.

Referring back to FIG. 1, stage 1220 includes fetching, from a memory unit, k'th quality level n'th encoded frame portion P(k,n) and context information CI(k,n-1).

Stage 1220 is followed by (stage 1230) providing P(k,n) and CI(kn-1) to an entropy decoder.

Stage 1230 is followed by (stage 1240) entropy decoding P(k,n) by the entropy decoder. The entropy decoding uses CI(k,n-1), and includes generating (i) the k'th quality layer n'th encoded frame portion context information CI(k,n) and (ii) the k'th quality layer n'th frame portion entropy decoded information EDI(k,n).

Stage 1240 is followed by (stage 1250), storing CI(k,n) and sending EDI(k,n) to a merging unit.

Stage 1250 is followed by (stage 1260) merging EDI(k,n) with entropy decoded information of a previous quality layer for the n'th frame portion. If, for example, k=q+1, then EDI(k,n) can be merged with EDI(k-1,n) till EDI(k-q,n). The outcome of the merging is denoted MEDI(k,n). The merging may include adding EDI(k,n) to entropy decoded information of one or more previous quality layer, the adding may be preceded by performing a frequency/time domain conversion and may be followed by a reverse frequency/time domain conversion.

Stage 1260 is followed by (stage 1270) checking if MEDI(k,n) reached a desired quality level. If the answer is positive stage 1270 is followed by stage 1280. Else - stage 1270 is followed by stage 1275 of increasing k (k=k+1). Stage 1275 is followed by jumping back to stage 1210.

Stage 1280 includes storing MEDI(k,n), and additionally or alternatively, further processing MEDI(k,n) to provide a decoded n'th frame portion DF(n). The further processing may include motion vector compensation, filtering (such as deblocking filtering) and the like. Stage 1280 also includes resetting k.

Stage 1280 is followed by stage 1290 of determining whether the entire encoded frame was entropy decoded (if n reached a final value) or whether there are more encoded frame portions to process. If the entire encoded frame was entropy decoded, then stage 1290 is followed by stage 1300 of selecting a new encoded frame and jumping to stage 1120. If there are additional encoded frame portions to process then stage 1290 is followed by stage 1210.

Table 1 provides an illustration of multiple iterations of method 1100, starting with a first iteration in which both quality level index and frame portion index are initialized. The "S" column indicates the stage that is being executed while the "Content" column illustrates in further details one or more operations that are being executed during these stages.

**Table 1**

| S | content |
|---|---|
| 1110 | n=1 k=1 |
| 1120 | Fetching, P(1,1). |
| 1130 | Providing to an entropy decoder, P(1,1). |
| 1140 | Entropy decoding P(1,1) by the entropy decoder. Generating CI(1,1) and EDI(1,1). |
| 1150 | Storing CI(1,1) and sending EDI(1,1) to a merging unit. |
| 1170 | Determining that EDI(1,1) did not reach the desired quality level. |
| 1175 | k=k+1. |
| 1120 | Fetching, P(2,1). |
| 1130 | Providing to an entropy decoder, P(2,1). |
| 1140 | Entropy decoding P(2,1) by the entropy decoder. Generating CI(2,1) and EDI(2,1). |
| 1150 | Storing CI(2,1) and sending EDI(2,1) to a merging unit. |
| 1170 | Determining that EDI(2,1) did not reach the desired quality level. |
| 1175 | k=k+1. |
| 1120 | Fetching, P(3,1). |
| 1130 | Providing to an entropy decoder, P(3,1). |
| 1140 | Entropy decoding P(3,1) by the entropy decoder. Generating CI(3,1) and EDI(3,1). |
| 1150 | Storing CI(3,1) and sending EDI(3,1) to a merging unit. |
| 1170 | Determining that EDI(3,1)reached the desired quality level. |
| 1180 | Storing MEDI(3,1), and additionally or alternatively, further processing MEDI(3,1) to provide DF(1). k=1. |
| 1210 | Increasing n to 2. Determining which context information CI(1,1) to fetch. |
| 1220 | Fetching, from a memory unit, P(1,2) and CI(1,1). |
| 1230 | Providing to an entropy decoder, P(1,2) and CI(1,1). |
| 1240 | Entropy decoding P(1,2) by the entropy decoder. Generating CI(1,2) and EDI(1,2). |
| 1250 | Storing CI(1,2) and sending EDI(1,2) to a merging unit. |
| 1260 | Merging EDI(1,2) with EDI(1,1) to provide MEDI(1,2). |
| 1270 | Determining that MEDI(1,2) did not reach the desired quality level. |
| 1275 | k=k+1 |
| 1210 | Increasing n. Determining which context information CI(2,1) to fetch. |
| 1220 | Fetching, from a memory unit, P(2,2) and CI(2,1). |
| 1230 | Providing to an entropy decoder, P(2,2) and CI(2,1). |
| 1240 | Entropy decoding P(2,2) by the entropy decoder. Generating CI(2,2) and EDI(2,2). |
| 1250 | Storing CI(2,2) and sending EDI(2,2) to a merging unit. |
| 1260 | Merging EDI(2,2) with EDI(1,2) to provide MEDI(2,2). |
| 1270 | Determining that k did not reach the desired quality level. |
| 1275 | k=k+1 |
| 1210 | Increasing n. Determining which context information CI(3,1) to fetch. |
| 1220 | Fetching, from a memory unit, P(3,2) and CI(3,1). |
| 1230 | Providing to an entropy decoder, P(3,2) and CI(3,1). |
| 1240 | Entropy decoding P(3,2) by the entropy decoder. Generating CI(3,2) and EDI(3,2). |
| 1250 | Storing CI(3,2) and sending EDI(3,2) to a merging unit. |
| 1260 | Merging EDI(3,2) with EDI(1,2) to provide MEDI(3,2). |
| 1270 | Determining that k reached the desired quality level. |
| 1280 | Storing MEDI(3,2), and additionally or alternatively, further processing MEDI(3,2) to provide DF(2). K=1 |
| | REPEATING STAGES 1110-1290 until n=481 and jumping to the next frame (1300) |

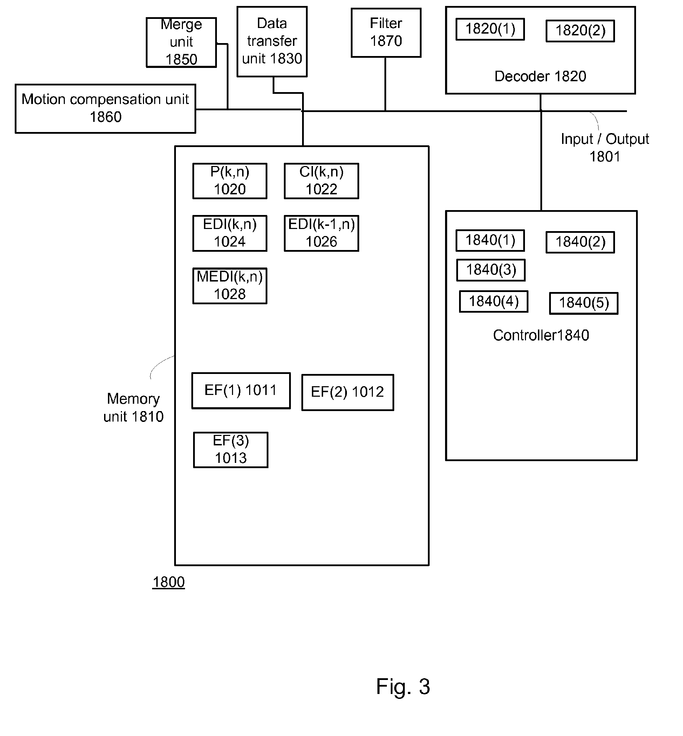

FIG. 3 schematically shows a first example of an embodiment of a video processing system 1800.

The video processing system 1800 may include a memory unit 1810, an entropy decoder such as decoder 1820, a data transfer unit 1830, a controller 1840, a merge unit 1850, a motion compensation unit 1860, a filter 1870 and an input/output port 1801.

The controller 1840 may manage the memory unit 1810, the decoder 1820, the filter 1870, the motion compensation unit 1860, the merge unit 1850 and the data transfer unit 1830 by sending instructions and timing signals to these modules.

Memory unit 1810 is illustrated as storing the following data structures: P(k,n) 1020, CI(k,n) 1022, EDI(k,n) 1024, EDI(k-1,n) 1026 and MEDI(k,n) 1028. Memory unit 1810 may also store encoded frame portions, entropy decoded frames and context information in addition to these illustrated data structures.

The video processing system 1800 may execute method 1100. The following table illustrates stages of method 1100 being executed by the decoder 1820, the data transfer unit 1830, the controller 1840, the merge unit 1850, the motion compensation unit 1860, and the filter 1870. The memory unit 1810 stores encoded frame portions and data structures that are required during the execution of method 1100.

**Table 2**

| Order | Memory unit 1810 | Decoder 1820 | Data transfer unit 1830 | Controller 1840 | Merge unit 1850 | Additional units (1860, 1870) |
|---|---|---|---|---|---|---|
| 1 | | | | 1110 | | |
| 2 | 1120 | | 1120 | | | |
| 3 | 1130 | | 1130 | | | |
| 4 | | 1140 | | | | |
| 5 | 1150 | | 1150 | | | |
| 6 | | | | | 1160 | |
| 7 | | | | 1170, 1175 | | |
| 8 | 1180 (Store) | | | 1180 (resetting k) | 1180 (further process) | 1180 (further process) |
| 9 | | | | 1210 | | |
| 10 | | | 1220 | | | |
| 11 | | | 1230 | | | |
| 12 | | 1240 | | | | |
| 13 | 1250 | | 1250 | | | |
| 14 | | | | | 1260 | |
| 15 | | | | 1270, 1275 | | |
| 16 | 1180 (Store) | | | 1180 (resetting k) | 1180 (further process) | 1180 (further process) |
| 17 | | | | 1290 | | |
| 18 | | | | 1300 | | |

Controller 1840 may include: (i) an initialization circuit 1840(1) for setting an encoded frame portion index n to an initialization value such as one (n=1) and setting a quality layer index k to an initialization value such as one (k=1); (ii) a quality level evaluator 1840(2) for checking if k reached a desired quality level - base don predetermined desired best quality level; (iii) an incrementing circuit 1840(3) for increasing k (k=k+1) and for increasing n (n=n+1); (iv) a context information selector 1840(4) for determining which context information CI(k,n-1) to fetch; and (iv) an end of frame detector 1840(5) for determining whether the entire encoded frame was entropy decoded (if n reached a final value) or whether there are more encoded frame portions to process, and for selecting a new encoded frame.

Data transfer unit 1830 may be configured to (i) fetch, from a memory unit, k'th quality level n'th encoded frame portion P(k,n); (ii) provide P(k,n) to the entropy decoder 1820, (iii) send EDI(k,n) to a merging unit; (iv) send CI(k,n) to the memory unit; (v) fetch, from a memory unit, P(k,n) and CI(k,n-1); and (vi) provide to the entropy decoder, P(k,n) and CI(k,n-1).

Decoder 1820 is configured to perform entropy decoding of P(k,n). It may apply a CABAC decoding or CAVLC decoding. Decoder 1820 may include (a) context information generator 1820(1) for generating CI(k,n), and (b) information generator 1820(2) for generating EDI(k,n).

Other processing units such as motion compensation unit 1860 and filter 1870 may further process entropy decoded frame portions.

Merge unit 1850 may merge EDI(k,n) with EDI(k-1,n) - if k>1, to provide MEDI(k,n).

A combination of quality and spatial scalability can be provided. Method 1100 and video processing system 1800 can provide quality scalability. The quality scalability may be followed by or preceded by spatial scalability. Yet for another example, spatial and quality scalabilities may be executed in parallel, in a pipelined manner, and the like. For example, the outcome of the entropy decoding process of method 1100 of the multiple quality level representations of an encoded frame portion can be regarded as a base spatial resolution layer. The base spatial resolution layer as well as higher spatial resolution layers can be processed by the decoder 1820.

In order to reduce the amount of traffic between the memory unit and the decoder, during the spatial scalability process, each spatial resolution layer may be represented by compact data structures.

Referring to FIG. 1, the spatial scalability process may be included in stage 1280 of further processing MEDI(k,n) to provide a decoded n'th frame portion DF(n). This is illustrated by box 1600 "spatial resolution encoding".

Alternatively, the spatial resolution encoding may follow method 100. Decoded frame portion DF(n) may be spatial scalability processed to provide a higher spatial scalability level frame portion. Thus, the spatial scalability process of a frame (or of a frame portion) may occur after the completion of the processing of that frame or frame portion by method 1100.

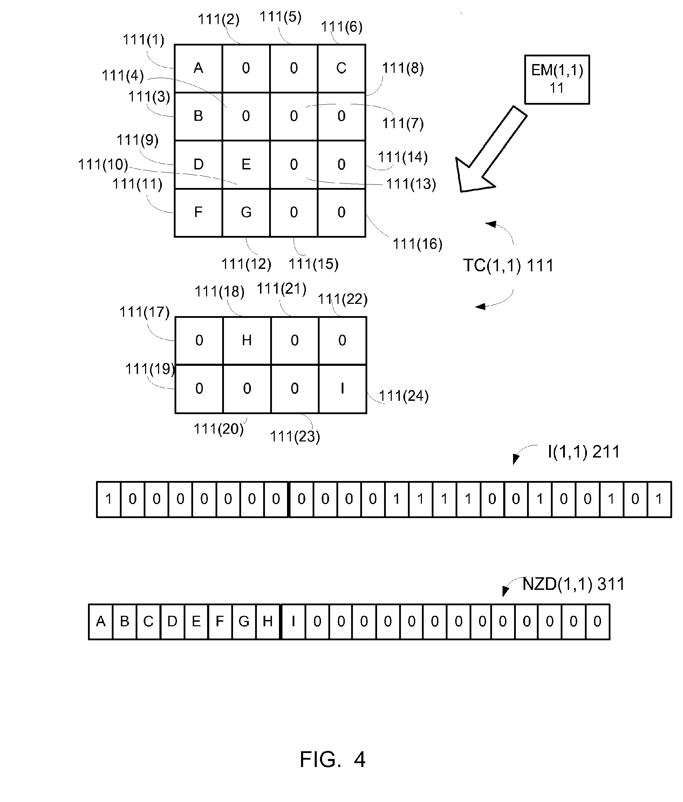

FIG. 4 schematically shows an example of an embodiment for a fist layer with a first layer first set of transfer coefficient groups TC(1,1) 111 that includes Luma transfer coefficients and Chroma transfer coefficients. The first layer may be formed from MEDI(k,n) elements - so that the lowest spatial resolution layer is the outcome of the scalable quality entropy encoding.

TC(1,1) 111 represent a first encoded macroblock EM(1,1) 11 of first layer (denoted 10 in FIG. 4). This first layer may be a base layer of a lowest quality level.

TC(1,1) 111 includes first layer first set (FLFS) transfer coefficient groups. In the example twenty four groups are shown, however depending on the specific encoding scheme another number of groups may be used. The shown groups start by sixteen FLFS Luma transfer coefficient groups that are followed by eight FLFS Chroma transfer coefficient groups.

The FLFS Luma transfer coefficient groups include 4x4 FLFS Luma transfer coefficients groups 111(1)-111(16), each including 4 FLFS Luma transfer coefficients. The first, third, sixth, ninth, tenth, eleventh and twelfth FLFS transfer coefficient groups (111(1), 111(3), 111(6), 111(9), 120(10), 111(11) and 111(12)) are non-zero FLFS Luma transfer coefficient groups while the other FLFS Luma transfer coefficient groups (111(2), 111(4), 111(5), 111(7), 111(8), 111(13), 111(14), 111(15) and 111(16)) are zero value FLFS Luma transfer coefficient groups.

The FLFS Chroma transfer coefficient groups include 4x2 FLFS Chroma transfer coefficients groups 111(17)-111(24), each including 4 FLFS Chroma transfer coefficients. The nineteenth and twenty fourth FLFS transfer coefficient groups (111(18) and 111(24)) are non-zero Chroma transfer coefficient groups while the other Chroma transfer coefficient groups (111(17), 111(19), 111(20), 111(21), 120(22), and 111(23)) are zero value Chroma transfer coefficient groups.

A decoder generates TC(1,1) 111 during the entropy decoding process. Instead of sending the entire TC(1,1) 111 to a memory unit, the decoder generates compact data structures that are sent to the memory unit and are retrieved when a corresponding encoded macroblock of the second layer is decoded. FIG. 1 illustrates two compact data structures 211 and 311 that represent TC(1,1) 111.

These compact data structures include FLFS non-zero indicators I(1,1) 211 and FLFS non-zero data structure NZD(1,1) 311.

I(1,1) 211 indicate which transfer coefficients groups of TC(1,1) 111 are non-zero. Each set bit of I(1,1) 211 is indicative of a non-zero FLFS transfer coefficient group. FIG. 1 illustrates a bit map that indicates that the first, third, sixth, ninth, tenth, eleventh, twelfth, nineteenth and twenty fourth FLFS transfer coefficient groups of TC(1,1) 111 are non-zero FLFS transfer coefficient groups while other FLFS transfer coefficient groups are zero value FLFS transfer coefficient groups.

NZD(1,1) 311 includes an ordered sequence of the non-zero FLFS transfer coefficient groups - 111(1), 111(3), 111(6), 111(9), 120(10), 111(11), 111(12), 111(18) and 111(24), as represented in FIG. 1 by the letters A-I. It does not include the zero value first layer first macroblock transfer coefficient groups. Thus, less data needs to be sent.

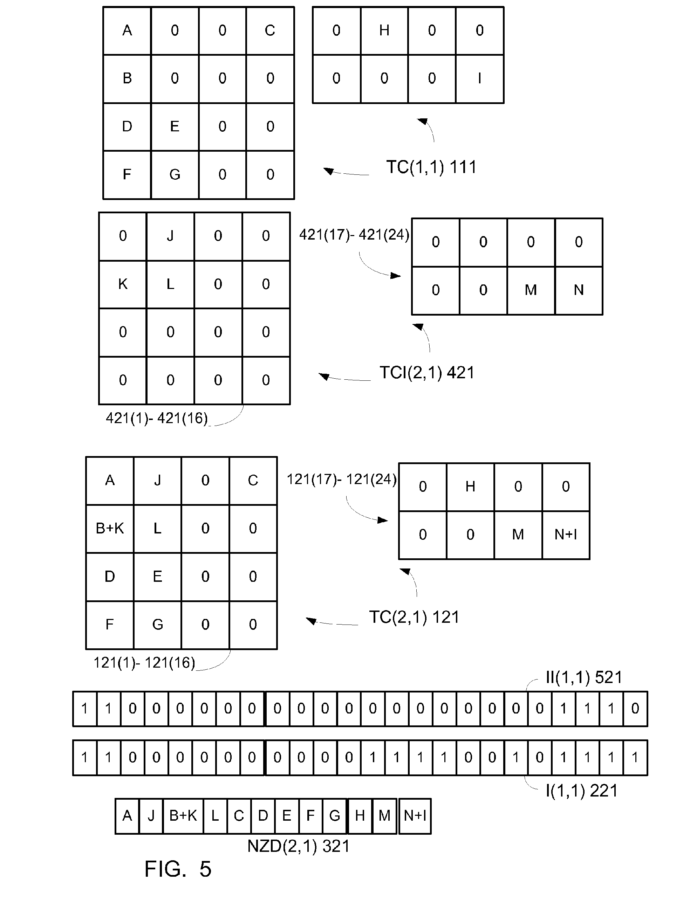

FIG. 5 schematically shows a second example of an embodiment for a second layer of a higher quality level than the first layer of FIG. 1 with a second layer first set (SLFS) of intermediate transfer coefficient groups TCI(2,1) 421, of SLFS transfer coefficient group TC(2,1) 121, of two compact data structures 221 and 321 that represent a SLFS transfer coefficient groups set TC(2,1) 121, and of SLFS intermediate non-zero indicators II(2,1) 521.

Encoded macroblock EM(2,1) 21 is processed to provide TCI(2,1) 421.

TCI(2,1) 421, I(1,1) 211 and NZD(1,1) 311 are processed to provide TC(2,1) 121. The decoder adds or otherwise merges TC(1,1) 111 and TCI(2,1) 421 to provide TC(2,1) 121.

TC(2,1) 121 is processed to provide I(2,1) 221 and NZD(2,1) 321.

TCI(2,1) 421 includes twenty four SLFS intermediate transfer coefficient groups, starting by sixteen SLFS intermediate Luma transfer coefficient groups that are followed by eight SLFS intermediate Chroma transfer coefficient groups. Although, again, it will be appeared that other numbers might be used.

The SLFS intermediate Luma transfer coefficient groups 121 include 4x4 SLFS intermediate Luma transfer coefficients groups 121(1)-121(16), each including four SLFS intermediate Luma transfer coefficients. The second , third and fourth SLFS intermediate transfer coefficient groups 121(2), 121(3) and 121(4) are non-zero SLFS intermediate Luma transfer coefficient groups while the other SLFS intermediate Luma transfer coefficient groups (121(1), and 121(5) - 121(16)) are zero value SLFS intermediate Luma transfer coefficient groups.

The SLFS intermediate Chroma transfer coefficients 312 include 4x2 SLFS intermediate Chroma transfer coefficients groups 121(17)-121(24), each including four SLFS intermediate Chroma transfer coefficients. The twenty third and twenty fourth SLFS intermediate transfer coefficient groups (121(23) and 121(24)) are non-zero SLFS intermediate Chroma transfer coefficient groups while the other SLFS intermediate Chroma transfer coefficient groups (121(17) - 121(21)) are zero value SLFS Chroma transfer coefficient groups.

TC(2,1) 121 includes twenty four SLFS transfer coefficient groups, starting by sixteen SLFS Luma transfer coefficient groups that are followed by eight SLFS Chroma transfer coefficient groups.

The second SLFS Luma transfer coefficient groups include 4x4 SLFS Luma transfer coefficients groups 121(1)-121(16), each including four SLFS Luma transfer coefficients. The first , second , third , fourth, sixth, ninth, tenth, eleventh and twelfth SLFS transfer coefficient groups (121(1), 121(2), 121(3), 121(4), 121(6), 121(9), 121(10), 121(11) and 121(12)) are non-zero SLFS Luma transfer coefficient groups while the other SLFS Luma transfer coefficient groups (121(5), 121(7), 121(8), 121(13), 121(14), 121(15) and 121(16)) are zero value SLFS Luma transfer coefficient groups.

The SLFS Chroma transfer coefficient groups include 4x2 SLFS Chroma transfer coefficients groups 121(17)-121(24), each including four SLFS Chroma transfer coefficients. The eighteenth, twenty third and twenty fourth SLFS transfer coefficient groups (121(18), 121(23) and 121(24)) are non-zero SLFS Chroma transfer coefficient groups while the other SLFS Chroma transfer coefficient groups (121(17), 121(19) - 121(22)) are zero value SLFS Chroma transfer coefficient groups.

Assuming that the merger includes adding transform coefficients of different encoded macroblocks that are located at the same location then table 3 illustrates the merge operation that generated TCI(2,1). It is noted that the values that are included in the table are obtained after performing an inverse transform such as Inverse Discrete Fourier Transform.

**Table 3**

| Transform coefficient of TC(1,1) | value of transform coefficient | Transform coefficient of TCI(2,1) | Value of transform coefficient | Transform coefficient of TC(2,1) | Value of transform coefficient |
|---|---|---|---|---|---|
| 111(1) | A | 421(1) | 0 | 121(1) | A |
| 111(2) | 0 | 421(2) | J | 121(2) | J |
| 111(3) | B | 421(3) | K | 121(3) | B+K |
| 111(4) | 0 | 421(4) | L | 121(4) | L |
| 111(5) | 0 | 421(5) | 0 | 121(5) | 0 |
| 111(6) | C | 421(6) | 0 | 121(6) | C |
| 111(7) | 0 | 421(7) | 0 | 121(7) | 0 |
| 111(8) | 0 | 421(8) | 0 | 121(8) | 0 |
| 111(9) | D | 421 (9) | 0 | 121 (9) | D |
| 111(10) | E | 421(10) | 0 | 121(10) | E |
| 111(11) | F | 421(11) | 0 | 121(11) | F |
| 111(12) | G | 421(12) | 0 | 121(12) | G |
| 111(13) | 0 | 421(13) | 0 | 121(13) | 0 |
| 111(14) | 0 | 421(14) | 0 | 121(14) | 0 |
| 111(15) | 0 | 421(.15) | 0 | 121(15) | 0 |
| 111(16) | 0 | 421(16) | 0 | 121(16) | 0 |
| 111(17) | 0 | 421(17) | 0 | 121(17) | 0 |
| 111(18) | H | 421(18) | 0 | 121(18) | H |
| 111(19) | 0 | 421(19) | 0 | 121(19) | 0 |
| 111(11) | 0 | 421(11) | 0 | 121(11) | 0 |
| 111(21) | 0 | 421(21) | 0 | 121(21) | 0 |
| 111(22) | 0 | 421(22) | 0 | 121(22) | 0 |
| 111(23) | 0 | 421(23) | M | 121(23) | M |
| 111(24) | I | 421(24) | N | 121(24) | I+N |

In the example of FIG. 5, TC(2,1) 121 is represented by two compact data structures - SLFS non-zero indicators I(2,1) 211 and SLFS non-zero data structure NZD(2,1) 321.

I(2,1) 211 indicate which SLFS transfer coefficients groups of TC(2,1) 121 are non-zero. Each set bit of I(2,1) 211 is indicative of a non-zero SLFS transfer coefficient group. FIG. 5 illustrates a bit map that indicates that the first , second , third , fourth, sixth, ninth, tenth, eleventh, twelfth, eighteenth, twenty third and twenty fourth transfer coefficient groups of TC(2,1) 121 are non-zero SLFS transfer coefficient groups while other SLFS transfer coefficient groups of TC(2,1) 121 are zero value SLFS transfer coefficient groups.

NZD(2,1) includes an ordered sequence of non-zero SLFS transfer coefficient groups - 121(1), 121(2), 121(3), 121(4), 121(6), 121(9), 121(10), 121(11), 121(12), 121(18), 121(23) and 121(24). It does not include zero value second transfer coefficient groups.

FIG. 5 also illustrates intermediate non-zero indicators II(2,1) 511 that indicate which SLFS intermediate transfer coefficients groups of TCI(2,1) 421 are non-zero SLFS transfer coefficient groups.

The decoder can send I(2,1) 221 and NZD(2,1) 321 to a memory unit. This may occur if these compact data structures have further use - for example if the decoding process requires that one or more additional enhancement layers are decoded. If, for example, the decoding process ends by decoding the second layer than these compact data structures can not be generated or not sent to the memory unit.

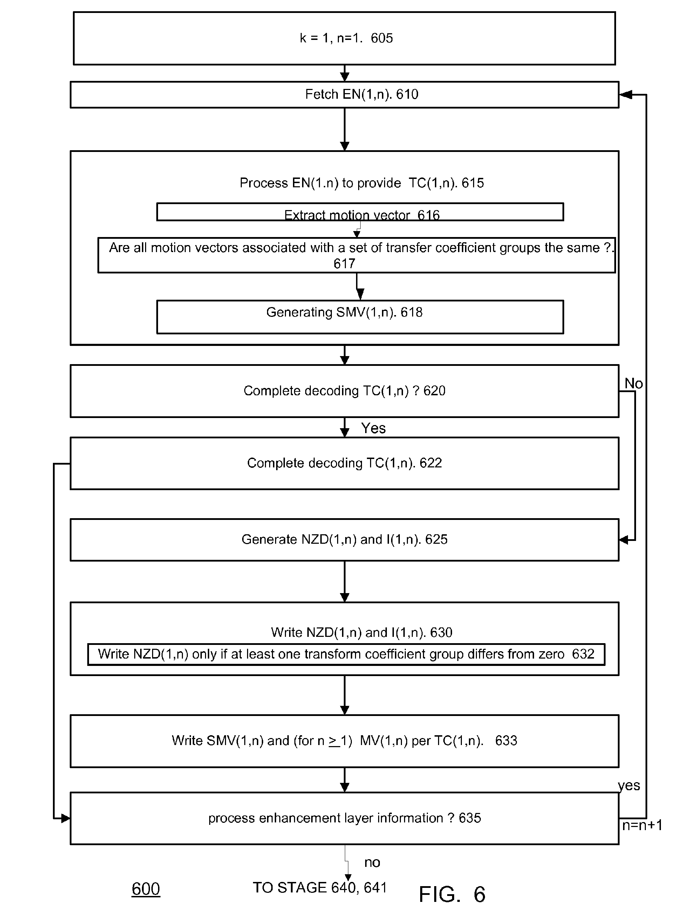

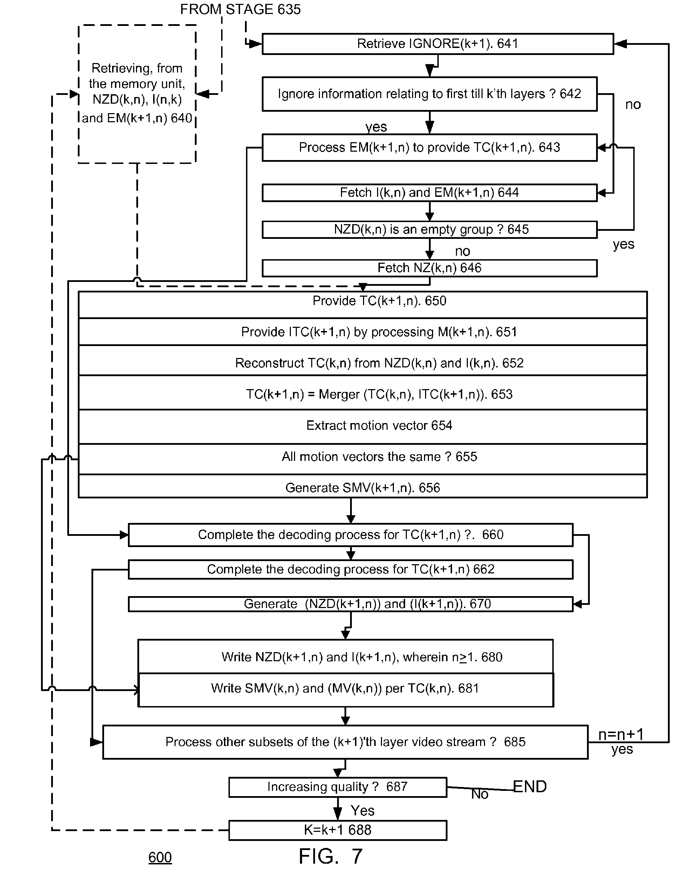

FIGs. 6 and 7 schematically show an example of an embodiment of method 600.

Motion vectors are generated during the encoding process. The encoding process may include generating motion vectors. A motion vector is a two-dimensional vector that is used for inter prediction that provides an offset from the coordinates in the decoded picture to the coordinates in a reference picture. Each set of transfer coefficient group has a motion vector that refers to another (Reference) set of transfer coefficients.

Method 600 may allow a further reduction of the amount of information that is sent to and stored in the memory unit - by reducing the number of motion vectors that are written to the memory unit.

For example, the set of transfer coefficient groups are processed after each other. Thus, if all the motion vectors associated with a set of transfer coefficient groups are the same only a single motion vector can be sent to the memory unit and a single motion vector indicator could be set to indicate that all the motion vectors associated with a set of transfer coefficient groups are the same.

The decoding process may include generating a single motion vector data structure. The single motion data structure may include up to a single motion vector per set of transfer coefficient groups.

The decoding process may also include generating an additional motion vector data structure. The additional motion vector data structure includes the rest of the motion vectors per each set of transfer coefficient group - that are not included in the single motion vector data structure.

Method 600 starts, as shown by stage 605 with setting a layer index k to an initial value such as 1 (k = 1) and setting encoded macroblock index n to an initial value such as 1 (n=1). These initial values correspond to the layer and macroblock to be decoded.

Stage 605 is followed by stage 610 of fetching a first layer n'th encoded macroblock from a memory unit. During the decoding process the encoded macroblock is converted to a decoded macroblock. It is noted that in this example the size of the encoded macroblock is assumed not known in advance and stage 610 includes fetching first layer information that is expected to include at least one encoded macroblock. Stage 610 may include fetching a first layer encoded macroblock, a portion of the first layer video stream or the entire first layer video stream. It is assumed, for simplicity of explanation, that during a first iteration of stage 610 only a first layer first encoded macroblock is fetched.

Stage 610 is followed by stage 615 of processing, by a decoder, a first layer n'th encoded macroblock to provide first layer n'th set of transform coefficient groups TC(1,n).

Stage 615 may also include stage 616 of extracting a motion vector per each transform coefficient group, stage 617 of determining if all motion vectors associated with a set of transform coefficient groups are the same an stage 618 of generating, based on the determination of stage 617, a single motion vector indicator (SMV(1,n)) indicating whether all motion vectors associated with TC(1,n) are the same.

Stage 615 is followed by stage 620 of determining whether to complete the decoding process for TC(1,n) (and jump to stage 622) or to continue the decoding process and generate information that will be required when a processing TC(2,n) (and jump to stage 625).

Stage 622 includes completing the decoding process for TC(1,n) and jumping to stage 635.

Stage 625 includes generating a first layer n'th set non-zero data structure NZD(1,n) and first layer n'th set non-zero identifiers I(1,n). NZD(1,n) includes only non-zero first layer n'th set transform coefficient groups and does not include zero value first layer n'th set transform coefficient groups. The first layer n'th set transform coefficient groups are associated with a first quality level. The first layer n'th set non-zero indicators are indicative of non-zero first layer n'th set transform coefficient groups.

Stage 625 is followed by stage 630 of writing to the memory unit NZD(1,n) and I(1,n).

The writing of NZD(1,n) to the memory may be conditioned - NZD(1,n) will be written to the memory unit only if it includes at least one non-zero first layer n'th set transform coefficient group. This is illustrated by stage 632.

Stage 630 also includes stage 633 of writing to the memory unit the single motion vector identifier SMV(1,n) and at least one motion vector (MV(1,n)) per TC(1,n) - according to the determination of stage 617. Stage 631 may include writing up to a single motion vector per TC(1,n) to a single motion vector data structure S and writing multiple motion vectors of TC(1,n) - if such exist - to a multiple motion vector data structure MU. The single motion vector indicator SMV(1,n) indicates whether to fetch a motion vectors from S or MU.

Stage 630 is followed by stage 635 of determining whether to process other subsets of the first layer video stream, increasing n by one (n=n+1) and jumping to stage 610, or to continue the decoding process by processing enhancement layer information and jumping to stage 641.

Stage 635 may be followed by a stage 640 of retrieving, from the memory unit, a k'th layer n'th set non-zero data structure NZD(k,n), a k'th layer n'th set non-zero identifiers I(k,n) and (k+1)'th layer information such as (k+1)'th layer n'th encoded macroblock.

In order to further reduce the transfer of data between layers the retrieval of data from the memory unit the retrieval of NZD(k,n) and, additionally or alternatively of I(k,n) may be conditioned, as illustrated by stages 641 - 646.

Stages 641-646 are alternative stages to stage 640. For simplicity of explanation,

FIG. 7 illustrates both stage 640 and stages 641-646. Stage 640 can be an alternative to stages 641-646.

Stage 641 includes retrieving IGNORE(k+1) that is indicative of whether to ignore information from previous layers.

Stage 641 is followed by stage 642 of determining, based on the value of IGNORE(k+1) whether to (a) ignore information relating to previous layers (base layer till k'th layer) and jump to stage 643, or (b) not to ignore information relating to previous layers and jump to stage 644.

Stage 643 includes processing EM(k+1,n) regardless of k'th layer information to provide TC(k+1,n). This processing resembles the processing of base layer encoded macroblocks and may include stage 615. Stage 643 is followed by stage 660.

Stage 644 includes fetching EM(k+1,n) and I(k,n).

Stage 644 is followed by stage 645 of determining whether NZD(k,n) is an empty group (all k'th layer n'th set transform coefficient groups are zero). If the answer is positive then NZD(k,n) is not fetched from the memory unit and stage 644 is followed by stage 643.

If NZD(k,n) is not an empty group then stage 645 is followed by stage 646 of fetching NZD(k,n). Stage 646 is followed by stage 650.

Stage 644 may include fetching SMV(1,k) and either one motion vector from S or multiple motion vectors from MU - based on the value of SMV(1,k).

Stage 650 includes processing, by a decoder, the k'th layer n'th set non-zero data structure (NZD(k,n) the k'th layer n'th set non-zero identifiers (I(k,n)) and the (k+1)'th layer n'th encoded macroblock (EM(k+1,n)) to provide (k+1)'th layer n'th set transform coefficient groups TC(k+1,n).

Stage 650 may include stages 651, 652, 653, 654, 655 and 656.

Stage 651 includes processing M(k+1,n) to provide (k+1)'th layer n'th set intermediate transform coefficient groups ITC(k+1,n).

Stage 652 includes reconstructing TC(k,n) from NZD(k,n) and I(k,n).

Stage 653 includes merging TC(k,n) and ITC(k+1,n) to provide TC(k+1,n).

Stage 650 may also include stages 654, 655 and 656.

Stage 654 includes extracting a motion vector per each transform coefficient group.

Stage 655 includes determining if all motion vectors associated with a set of transform coefficient groups are the same.

Stage 656 includes generating, based on the determination of stage 655, a single motion vector indicator (SMV(k+1,n)) indicating whether all motion vectors associated with TC(k+1,n) are the same.

Stage 650 is followed by stage 660 of determining whether to complete the decoding process for TC(k+1,n) (and jump to stage 662) or to continue the decoding process of TC(k+1,n) by processing higher quality layers (and jump to stage 670).

Stage 662 includes completing the decoding process for TC(k+1,n) and jumping to stage 685.

Stage 670 includes generating a (k+1)'th layer n'th set non-zero data structure (NZD(k+1,n)) and (k+1)'th layer n'th set non-zero identifiers (I(k+1,n)). NZD(k+1,n) includes only non-zero (k+1)'th layer n'th set transform coefficient groups and does not include zero value (k+1)'th layer n'th set transform coefficient groups. TC(k+1,n) is associated with a (k+1)'th quality level. I(k+1,n) are indicative of non-zero (k+1)'th layer n'th set transform coefficient groups.

Stage 670 is followed by stage 680 of writing to the memory unit NZD(k+1,n) and I(k+1,n). The writing of NZD(k+1,n) to the memory may be conditioned - NZD(k+1,n) may be written to the memory unit only if it includes at least one non-zero (k+1)'th layer n'th set transform coefficient group.

Stage 680 may include stage 681 of writing to the memory unit the single motion vector identifier SMV(k,n) and at least one motion vector (MV(k,n)) per TC(k,n) - according to the determination of stage 655. Stage 681 may include writing up to a single motion vector per TC(k,n) to a single motion vector data structure S and writing multiple motion vectors of TC(1,n) - if such exist - to a multiple motion vector data structure MU. The single motion vector indicator SMV(1,n) indicates whether to fetch a motion vectors from S or MU.

Stage 680 is followed by stage 685 of determining whether to process other subsets of the (k+1)'th layer video stream - other encoded macroblocks of the (k+1)'th layer. If the answer is yes stage 685 is followed by increasing n and jumping to stage 641. Else- stage 685 is followed by stage 687 of determining whether to increase the quality of the video stream. If the answer is no then the method ends. Else- stage 687 is followed by stage 688 of increasing k (k=k+1). Stage 688 is followed by stage 640.

Method 600 can process any of the data structures illustrated in FIG. 2. For example, the first non-zero data structure may include an ordered and continuous sequence of non-zero first transform coefficient groups.

Either one of stages 610, 630, 640 and 670 may include executing multiple bursts that have a burst size. A burst may include exchanging multiple bits of information by the data transfer unit. The non-zero transform coefficient groups of each non-zero data structure may be are aligned to burst size. Thus, the burst size may be a multiple integer of the size of a non-zero coefficient group.

A decoding of a certain enhancement layer can be done regardless of information of one or more previous enhancement layers. A "skip previous layer" indicator can be provided and this indicator can indicate to ignore information of a previous enhancement layer. In this case the certain enhancement layer will be processed in the same manner as the first layer. Referring to the example set forth in FIG. 7 - stage 550 will include processing, by a decoder the (k+1)'th layer information to provide (k+1)'th transform coefficient groups.

Method 600 will be further explained using the following assumptions: (a) method 600 is executed one encoded macroblock after the other, (b) all the encoded macroblocks of one layer are processed before processing encoded macroblocks of another layer, (c) the processing includes processing a three layers, each layer includes N macroblocks, (d) method 600 includes stage 640 and not stages 641-646.

**Table 4**

| | |
|---|---|
| 610 | Fetch EM(1,1), K=1, n=1. |
| 615 | Processing EM(1,1) to provide TC(1,1), MV(1,1) and SMV(1,1) |
| 620 | Determining to continue the decoding |
| 625 | Generating NZD(1,1) and I(1,1) |
| 630 | Writing SMV(1,1), one or more of MV(1,1), NZD(1,1) and I(1,1) to memory unit |
| 635 | Determining to process other encoded macroblocks of the first layer, n=n+1 |
| 610 | Fetch M(1,2), K=1, n=2. |
| 615 | Processing M(1,2) to provide TC(1,2), MV(1,2) and SMV(1,2) |
| 620 | Determining to continue the decoding |
| 625 | Generating NZD(1,2) and I(1,2) |
| 630 | Writing SMV(1,2) one or more of MV(1,2), NZD(1,2) and I(1,2) to memory unit |
| 635 | Determining to process other encoded macroblocks of the first layer, n=n+1 REPEATING STAGES 610- 630 until n=N |
| 640 | Fetch EM(1,N), K=1, n=N. |
| 650 | Processing M(1,N) to provide TC(1,N), MV(1,N) and SMV(1,N) |
| 660 | Determining to continue the decoding |
| 670 | Generating NZD(1,N) and I(1,N) |
| 680 | Writing SMV(1,N), one or more of MV(1,N), NZD(1,N) and I(1,N) to memory unit |
| 685 | Determining to process other encoded macroblocks of the second layer, |
| 640 | Fetch EM(2,1), k=2, n=1. |
| 650 | Processing M(2,1) to provide TC(2,1), MV(2,1) and SMV(2,1) |
| 660 | Determining to continue the decoding |
| 670 | Generating NZD(2,1) and I(2,1) |
| 680 | Writing SMV(2,1), one or more of MV(2,1), NZD(2,1) and I(2,1) to memory unit |
| 685 | Determining to process other encoded macroblocks of the first layer, n=n+1 |
| 640 | Fetch EM(2,2), k=2, n=2. |
| 650 | Processing M(2,2) to provide TC(2,2), MV(2,1) and SMV(2,2) |
| 660 | Determining to continue the decoding |
| 670 | Generating NZD(2,2) and I(2,2) |
| 680 | Writing SMV(2,2), one or more of MV(2,2), NZD(2,2) and I(2,2) to memory unit |
| 685 | Determining to process other encoded macroblocks of the first layer, n=n+1 REPEATING STAGES 610- 630 until n=N |
| 640 | Fetch EM(2,N), K=1, n=N. |
| 650 | Processing M(2,N) to provide TC(2,N), MV(2,N) and SMV(2,N) |
| 660 | Determining to continue the decoding |
| 670 | Generating NZD(2,N) and I(2,N) |
| 680 | Writing SMV(2,N), one or more of MV(2,N), NZD(2,N) and I(2,N) to memory unit |
| 685 | Determining to process other encoded macroblocks of the third layer. |
| 640 | Fetch M(3,1), K=3, n=1. |
| 650 | Processing M(3,1) to provide TC(3,1), MV(3,1) and SMV(3,1) |
| 660 | Determining to complete the decoding for TC(3,1) |
| 662 | Completing the decoding process for TC(3,1) |
| 685 | Determining to process other encoded macroblocks of the third layer, n=n+1 |
| 640 | Fetch EM(3,2), k=3, n=2. |
| 650 | Processing M(3,2) to provide TC(3,2), MV(3,2) and SMV(3,2) |
| 660 | Determining to complete the decoding for TC(3,2) |
| 662 | Completing the decoding process for TC(3,2) |
| 685 | Determining to process other encoded macroblocks of the third layer, n=n+1 REPEATING STAGES 610 - 635 until n=N |
| 640 | Fetch M(3,N), k=3, n=N. |
| 650 | Processing M(3,N) to provide TC(3,N), MV(3,N) and SMV(3,N) |
| 660 | Determining to complete the decoding for TC(3,N) |
| 662 | Completing the decoding process for TC(3,N) |

Method 600, as illustrated above, includes a merger process (of TCI(k+1,n) and TC(k,n)) for each fetched encoded macroblock - and for each layer. It is noted that the merger may be executed one per multiple layers and even once per the entire decoding process.

If, for example, a merger is executed once per the entire decoding process then stage 653 will not include said merger, stage 662 will include completing the decoding process for TCI(k+l,n) - whereas the completion may include the merger of TCI(1,n)...TCI(N,n), and stage 670 will include generating NZD(k+1,n) and I(k+1,n) that represent TCI(k+1,n).

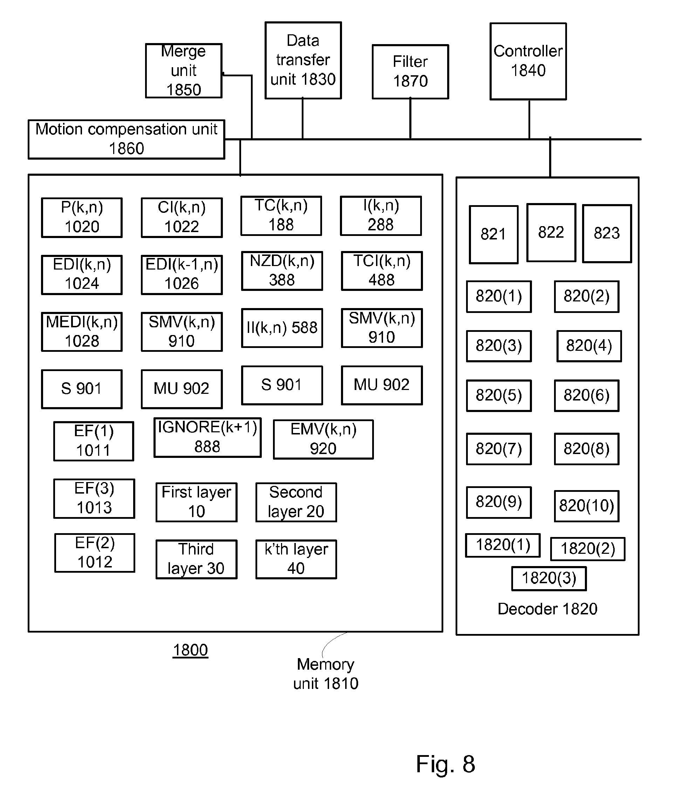

FIG. 8 provides a second example of an embodiment of a video processing system 1800. Video processing system 1800 may execute methods 1600 and 1100.

The video processing system 1800 may include a memory unit 1810, an entropy decoder such as decoder 1820, a data transfer unit 1830, a controller 1840, a merge unit 1850, a motion compensation unit 1860, a filter 1870 and an input/output port 1801.

The controller 1840 may manage the memory unit 1810, the decoder 1820, the filter 1870, the motion compensation unit 1860, the merge unit 1850 and the data transfer unit 1830 by sending instructions and timing signals to these modules.

Memory unit 1810 is illustrated as storing the following data structures: P(k,n) 1020, CI(k,n) 1022, EDI(k,n) 1024, EDI(k-1,n) 1026, MEDI(k,n) 1028, EF(1) 1011, EF(2) 1012, EF(3) 1013, S 901, MU 902, first layer 10, second layer 20, third layer 30, k'th layer 40 (assuming that k is bigger than three), TC(k,n) 188, I(k,n) 288, NZD(k,n) 388, TCI(k,n) 488, II(k,n) 588, SMV(k,n) 910, IGNORE(k+1) 888, and EMV(k,n) 920.

First layer 10 is the outcome of method 1100.

The decoder 1820 may also include (in addition to entities 1820(1) - 1820(2)), the following entities: (i) a second transform coefficient groups generator 821 for processing the second layer information and the first non-zero data structure to provide second transform coefficient groups; (ii) a second non-zero data structure generator 822 for generating a second non-zero data structure that comprises only non-zero second transform coefficient groups; (iii) a second non-zero indicators generator 823 for generating second non-zero indicators that are indicative of non-zero transform coefficient groups; (iv) a first layer processor 820(1) arranged to process a first layer n'th encoded macroblock to provide first layer n'th set of transform coefficient groups TC(1,n); (v) a motion vector extractor 820(2) arranged to extract a motion vector per each transform coefficient group; (vi) a decoder controller 820(3) arranged to determine if all motion vectors associated with a set of transform coefficient groups are the same; (vii) a single motion vector indicator generator 820(4) arranged to generate, based on the determination a single motion vector indicator (SMV(1,n)) indicating whether all motion vectors associated with TC(1,n) are the same; (viii) a decoding process completion module 820(4) arranged to complete the decoding process for TC(1,n); (ix) a first layer non-zero data structure generator 820(5) arranged to generate a first layer n'th set non-zero data structure NZD(1,1); (x) a first layer non-zero identifier generator 820(6) arranged to generate first layer n'th set non-zero identifiers I(1,1); (xi) a transfer coefficient group generator 820(7) arranged to process the k'th layer n'th set non-zero data structure (NZD(k,n) the k'th layer n'th set non-zero identifiers (I(k,n)) and the (k+1)'th layer n'th encoded macroblock (M(k+1,n)) to provide (k+1)'th layer n'th set transform coefficient groups TC(k+1,n); (xii) an intermediate set generator 820(8) arranged to process M(k+1,n) to provide (k+1)'th layer n'th set intermediate transform coefficient groups ITC(k+1,n); and (xiii) a reconstruction module 820(9) arranged to reconstruct TC(k,n) from NZD(k,n) and I(k,n).

Merge unit 1850 may also merge TC(k,n) and ITC(k+1,n) to provide TC(k+1,n).

In the foregoing specification, the invention has been described with reference to specific examples of embodiments of the invention. It will, however, be evident that various modifications and changes may be made therein without departing from the broader spirit and scope of the invention as set forth in the appended claims.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

The invention may also be implemented in a computer program for running on a computer system, at least including code portions for performing steps of a method according to the invention when run on a programmable apparatus, such as a computer system or enabling a programmable apparatus to perform functions of a device or system according to the invention.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on a non-transitory computer readable medium. The computer readable medium may be a part of a computer program product. All or some of the computer program may be provided on non-transitory computer readable media permanently, removably or remotely coupled to an information processing system. The non-transitory computer readable media may be included in a computer program product and may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit, associated memory and a number of input/output (I/O) devices. When executing the computer program, the computer system processes information according to the computer program and produces resultant output information via I/O devices.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first " and "second " are used to arbitrarily distinguish between the elements such terms describe. Thus, these terms are not necessarily intended to indicate temporal or other prioritization of such elements The mere fact that certain measures are recited in mutually different claims does not indicate that a combination of these measures cannot be used to advantage.

## Claims

1. A method for decoding an encoded video stream, the method comprises:
receiving an encoded video stream comprising a plurality of encoded video frames, each encoded video frame comprises multiple encoded frame portions;
repeating, for each encoded frame portion:
providing, to an entropy decoder, different quality level representations of the encoded frame portion and providing context information generated during an entropy decoding process of different quality level representations of another encoded frame portion;
entropy decoding, by the entropy decoder, the different quality level representations of the encoded frame portion based on the context information;
wherein the entropy decoding comprises updating the context information;
wherein the entropy decoding is selected from a group consisting of context based adaptive binary arithmetic coding (CABAC) and context based variable length coding (CBVLC); and
storing the context information.

2. The method according to claim 1, further comprising repeating, for each quality level of the different quality levels:
providing, to the entropy decoder, a certain quality level representation of the frame portion and context information generated during an entropy decoding process of a certain quality level representation of another frame portion;
entropy decoding, by the entropy decoder, the certain quality level representation of the frame portion based on the context information: wherein the entropy decoding comprises updating the context information; and
storing the context information.

3. The method according to claim 2, wherein the entropy decoding is CABAC and wherein the context information comprises most probable bin values, most probable bin values probabilities, and sub-interval information.

4. The method according to claim 1 , comprising:
generating a first spatial level representation of a frame by repeating, for all encoded frame portions of the frame, the stages of providing, entropy decoding and storing; and
generating a second spatial representation of the frame.

5. A computer program product that comprises a non-transitory computer readable medium that stores instructions for:
receiving an encoded video stream comprising a plurality of encoded video frames, each encoded video frame comprises multiple encoded frame portions;
repeating, for each encoded frame portion:
providing, to an entropy decoder, different quality level representations of the encoded frame portion and context information generated during an entropy decoding process of different quality level representations of another encoded frame portion;
entropy decoding, by the entropy decoder, the different quality level representations of the frame portion based on the context information; wherein the entropy-decoding comprises updating the context information; wherein the entropy decoding is selected from a group consisting of context based adaptive binary arithmetic coding (CABAC) and context based variable length coding (CBVLC); and
storing the context information.

6. The computer program product according to claim 5, wherein the non-transitory computer readable medium stores instructions for repeating, for each quality level of the different quality levels:
providing, to the entropy decoder, a certain quality level representation of the frame portion and context information generated during an entropy decoding process of a certain quality level representation of another frame portion;
entropy decoding, by the entropy decoder, the certain quality level representation of the frame portion based on the context information; wherein the entropy decoding comprises updating the context information; and
storing the context information.

7. The computer program product according to claim 5 or 6, wherein the entropy decoding is CABAC and the non-transitory computer readable medium stores instructions for generating context information that comprises most probable bin values, most probable bin values probabilities, and sub-interval information

8. The computer program product according to any one of claims 5-7, wherein the non-transitory computer readable medium stores instructions for:
generating a first spatial level representation of a frame by repeating, for all encoded frame portions of the frame, the stages of providing, entropy decoding and storing: and
generating a second spatial representation of the frame,

9. A video processing device, comprising:
a data transfer unit arranged to provide, to an entropy decoder, different quality level representations of an encoded frame portion and context information generated during an entropy decoding process of different quality level representations of another encoded frame portion;
an entropy decoder, arranged to entropy decode the different quality level representations of the frame portion based on the context information; wherein the entropy decoding comprises updating the context information; wherein the entropy decoding is selected from a group consisting of context based adaptive binary arithmetic coding (CABAC) and context based variable length coding (CBVLC):
a memory unit for storing the context information; and
a controller arranged to control a repetition, for each encoded frame portion out of multiple encoded frame portions, of:
a provision, to the entropy decoder, of different quality level representations of the encoded frame portion and context information,
an entropy decoding, and
a storage of the context information,

10. The device according to claim 9, wherein the entropy decoder is arranged to repeat, for each quality level of the multiple quality levels, an entropy decoding, of the certain quality level representation of the frame portion based on the context informalion;wherein the entropy decoding comprises updating the context information: and wherein the data transfer unit is arranged to repeat, for each quality level of the muitiple quality levels, a provision 10 the entropy decoder, a certain quality level representation of the frame portion and context information generated during an entropy decoding process of a certain quality level representation of another frame portion.

11. The device according to claim wherein the entropy decoder is arranged to perform CABAC and wherein the context information comprises most probable bin values, most probable bin values probabilities, and sub-interval information.

12. The device according to any one of claims 9-11, wherein the entropy decoder is arranged to generate a first level representation of the frame; and is arranged to generate a second spatial representation of the frame.
